# EUROPEAN PATENT APPLICATION

(11) **EP 0 895 335 A2**
(43) Date of publication of application: **03.02.1999**
(21) Application number: 98112015.7
(22) Date of filing: 30.06.1998
(51) Int. Cl.: H02K 15/03, H02K 1/27

(54) **Shear-spinning of rotors for magneto-generators**

(30) Priority: 28.07.1997 IT MI971799
(71) Applicant: DUCATI ENERGIA S.p.A., 40132 Bologna (IT)
(72) Inventor: Regazzi, Gianni, 40100 Bologna (IT); Magri, Marco, 40129 Bologna (IT)
(74) Representative: Coloberti, Luigi

(57) **Abstract**

A method for shear-spinning the rotor for a magneto-generator; the rotor comprises a cap-shaped member (10) of metallic material having a bottom (11) and peripheral walls defining a cylindrical ring (12) for circulation of the magnetic flux and a central hub (13) for connection to a drive shaft. The cap member (11, 12) and the central hub (13) are formed in one single piece from a cut disk (20) of malleable metallic material which is plastically cold-shaped by progressive rough-shaping stages to obtain the bottom wall (11) of the cap member, the peripheral ring (12) and the central hub (13) of the rotor by means of rolling or shear-spinning operations against shaping surfaces (21, 22, 25), while keeping the same cut disk (20) of material and/or the blank rotating.

## Description

### FIELD OF THE INVENTION

The present invention relates to the field of permanent-magnet electric generators or magneto-generators which are widely used in both two-stroke and four-stroke internal combustion engines, mainly in the field of motorcycles, snowmobiles and/or water-scooters; more particularly the invention relates to a method for shear-spinning the metal cap member of the flywheel rotor for the aforementioned electric generators.

The invention also relates to a flywheel rotor, the metal cap member of which has been obtained with the shear-spinning method referred to above.

### STATE OF THE ART

A rotor for a magneto-generator essentially consists of a cap member made of metallic material having a bottom and peripheral walls, defining a cylindrical ring for circulation of the magnetic flux, in which the cylindrical ring extends peripherally from the edge of the bottom wall, and a central hub for connection to a drive shaft; the internal surface of the cylindrical ring normally is provided with a circular disposition of permanent magnets which are arranged and designed to create an induced current in a stator winding of the generator, necessary for powering the electric loads of a vehicle, i.e. the ignition circuit of a combustion engine.

The rotors currently in use are made by mechanically joining together separate pieces comprising an outer cap made by shearing and by means of successive drawing operations with ordinary presses, using low-quality unalloyed steel, and a central hub of high-quality alloyed steel material obtained by means of lathe turning operations and broaching from a cold-extruded blank. The two pieces are then joined together in a successive step, for example by riveting, bevelling or in some other manner, after inserting the hub through a hole formed in the bottom wall of the metal rotor cap.

This system for manufacturing conventional flywheel rotors have some notable negative aspects and drawbacks resulting from the construction of the rotor as several separate parts, using materials with properties different from one another. It is in fact necessary to perform separate operations and machining steps on a series of separate machines, both in order to obtain the outer cap and in order to machine the hub of the rotor. Once the two pieces of the rotor have been obtained, it is then necessary to assemble them, again using special machines.

All this has a considerable negative effect in terms of time and costs, since it is necessary to have separate working lines, with special machines for the various operations; moreover the working cycle is somewhat complex and time-consuming so that prior programming is required. The working cycle is also extremely rigid in that it does not allow rapid modification or adaptation to the machining of rotors having different characteristics.

From a mechanical point of view there are also other drawbacks in that the mechanical connection between the central hub and the bottom wall of the cap is the weak point which is stressed the most and most easily subject to breakages and/or to the formation of cracks or flaws.

Moreover, with conventional technology where mechanical operations must be performed in succession on separate parts, there exists the risk of an accumulation of various defects due to possible imbalances in the finished pieces or misalignments between the outer cap and the hub, during assembly, misalignments which eventually requires careful balancing of the rotor which must be performed with machines specially designed for this purpose.

### OBJECTS OF THE INVENTION

The general object of the present invention is to provide a new method for the production of rotors for magneto-generators, of the type mentioned above, by means of which it is possible to overcome most of the drawbacks which are encountered with the current production technology.

The shear-spinning of metal pieces, by means of plastic cold-deformation of a starting blank, that is sheet metal forming by a revolving mandrel and a roller pressing the sheet, is a technology which is equally well known and used in some technological fields. According to this technology, the material of a starting blank, consisting of a highly malleable metallic material, is plastically shaped by rollers on a revolving mandrel until the piece assumes the final shape and dimensions.

However, the shear-spinning technology has been used hitherto in order to obtain mechanical parts which have functional features and requirements different from those of a rotor for magneto-generators and in any case has never been proposed and used in this specific field.

Following tests and experiments, it has been discovered, however, that this technology, by means of suitable measures, may be advantageously adapted to the production of rotors for magneto-generators, obtaining differently shaped and structured rotors having improved mechanical features compared to traditional ones.

Therefore, the main object of the present invention is to provide a method for the production of rotors for magneto-generators which makes use of the shear-spinning technology by means of which the metal cap member and the central hub of the rotor may be made as a single piece; this therefore eliminates entirely the need to perform machining operations on separate parts, and subsequent assembly operations necessary with the conventional technology, eliminating or reducing the problems associated with balancing of the rotor since the shear-spun rotor acquires a homogeneous and isotropic structure in the circumferential sense.

A further object of the present invention is to provide a method for forming rotors of the kind mentioned above, which allows considerably shorter working cycles which can be easily and rapidly adapted to different production requirements and which are such that they require lower investment costs compared to plants for the production of rotors by conventional technology.

Yet another object of the present invention is to provide a flywheel rotor for magneto-generators by means of the above mentioned shear-spinning method, which can be very rapidly manufactured in a single operation, which does not require subsequent machining operations, and which has an improved mechanical and magnetic structure.

The use of the shear-spinning technology in the production of permanent-magnet rotors is extremely innovative in that it achieves various unforeseen advantages.

By adopting this particular shaping method, it is possible to provide the material of the cup member, during shaping, with a varied hardening degree which may be suitably varied in those parts of the rotor which are most subject to stresses, by controlling the plastic deformation pressure such that the starting material, which is highly malleable, improves its mechanical strength until it reaches that of alloyed high-strength steels.

In fact, with this method, the crystal chain of the material will remain continuous in all the sections of the rotor, unlike the currently produced rotors where there are fibre breakages caused by the cutting and lathe operations on the machine tools.

The shear-spinning technology, applied to the production of rotors, also allows variation in the thickness of the material in those sections which are differently stressed, in particular in the connection zone between the central hub and the bottom wall of the cap member where flaws and/or deformations may normally occur.

### BRIEF DESCRIPTION OF THE INVENTION

These and further objects and advantages of the present invention may be obtained by means of a particular method for the shear-spinning of rotors according to Claim 1, and by means of a shear-spun rotor formed as a single piece, according to Claim 9.

In general, according to the invention, a method for shaping rotors for magneto-generators has been provided, in which the rotor comprises a cap member made of metallic material having a bottom and peripheral walls defining a cylindrical ring which extends from the peripheral edge of said bottom, and a central hub for connection to a drive shaft, the method being characterized by the fact that the cap member and the central hub of the rotor are formed as a single body from a cut disk of malleable metallic material which is shear-spun in the cold state, revolving and roll-pressing the cut disk which is shaped as a result of plastic flow of the material by successive rolling operations against rotating shaping surfaces.

According to a preferred embodiment of the invention, the cut disk is firstly cold-formed by shear-shaping in a central zone thereof until the hub and the bottom wall of the cap member are formed, and is then circumferentially folded along the peripheral edge and stretched in the axial direction until a cylindrical ring of the rotor is formed, by means of successive rolling operations along said central zone and along said peripheral edge of the disk, pressing the material against shaping surfaces which are made to rotate together with the disk of material and/or with the rough-shaping piece.

According to another aspect of the invention, it has been possible to provide a flywheel rotor for magneto-generators of the type comprising a cap member made of metallic material having a bottom and peripheral walls, defining a cylindrical ring for flux circulation which extends from said bottom wall, and a central hub for connection to a drive shaft, characterized in that the cap member and the central hub of the rotor are made in one single piece from a cut disk of malleable metallic material which is plastically cold-shaped by means of repeated rolling operations to cause the material of the disk to flow and adhere against shaping surfaces, modifying the shape and the thickness thereof, while the disk and the shaping surfaces are kept rotating; said central hub and said bottom wall of the cap member, in the connection zone, having increased and/or different thicknesses, hardening degree and mechanical strength of the material greater than the cylindrical ring.

### BRIEF DESCRIPTION OF THE DRAWINGS

These and further features of the method and the shear-spun rotor according to the invention, will emerge more clearly from the description, with reference to the accompanying drawings, in which:
Fig. 1 is a longitudinal sectional view through the starting metal disk;
Fig. 2 shows the shaping step of the blank comprising the bottom wall and the central hub;
Fig. 3 shows the folding step of the external edge of the cup;
Fig. 4 shows the shaping step of the cylindrical ring of the cap;
Fig. 5 is a cross-sectional view of the rotor cap at the end of the shaping;
Fig. 6 is a cross-sectional view along the line 6-6 of Figure 5;
Fig. 7 is a cross-sectional view along the line 7-7 of Figure 5;
Fig. 8 is a cross-sectional view similar to that of Figure 7 relating to a different embodiment.

### DETAILED DESCRIPTION OF THE INVENTION

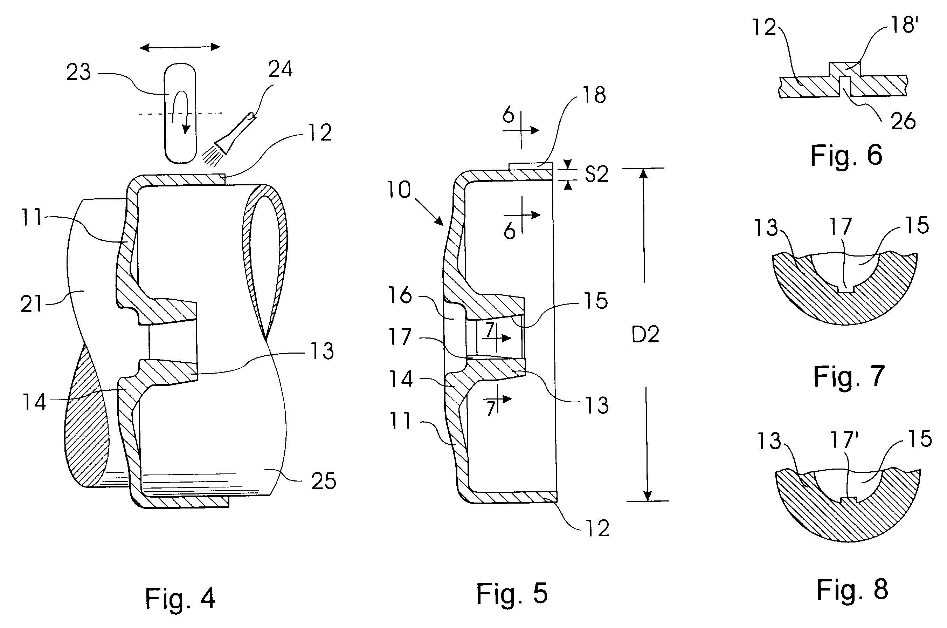

The structure of the rotor cap will first be described with reference to Figure 5 of the accompanying drawings.

The reference number 10 in Figure 5 indicates in its entirety the metal cap member of the rotor, without the permanent magnets which are normally fixed to the internal cylindrical surface of the peripheral ring 12, in a suitable positioning cage, in a manner known per se.

As shown in said Figure 5, according to the present invention, the cap member 10 comprises a bottom wall 11 which is suitably shaped, the peripheral edge of which extends by a cylindrical wall defining a ring 12 for circulation of the magnetic flux, which is coaxially arranged with a central hub 13 forming an integral part, as one single piece with the body of the rotor.

The cylindrical ring 12 has a substantially constant thickness, which is suitably calculated according to the quantity of magnetic flux which it has to flow, while the bottom wall 11 has a different thickness and is connected to the central hub 13 by means of an intermediate joining zone 14 of greater thickness, which is obtained according to the shear-spinning method described further below.

The hub 13 is made as one piece with the bottom wall 11 of the cap, and has a conical hole 15 for connection to a drive shaft; the conical hole 15 is coaxially extending to hub 13 and opens out into a cavity 16 on the external side of the bottom wall 11 of the rotor. In Figures 5 and 7, reference 17 denotes a longitudinal slot in the conical hole 15 for a normal key connection of the hub 13 to the drive spindle of the rotor, while reference 18 denotes a relief portion or a projection on the external surface of the cylindrical ring 12 which is designed to provide a phase-timing signal for the ignition circuit of a combustion engine to which the rotor 10 of the magneto-generator is directly connected. Instead of the slot 17 in Figures 5 and 7, the key connection to the drive shaft could be obtained by forming a relief portion 17' in the conical hole 15 of the hub, as shown in the detail of Figure 8.

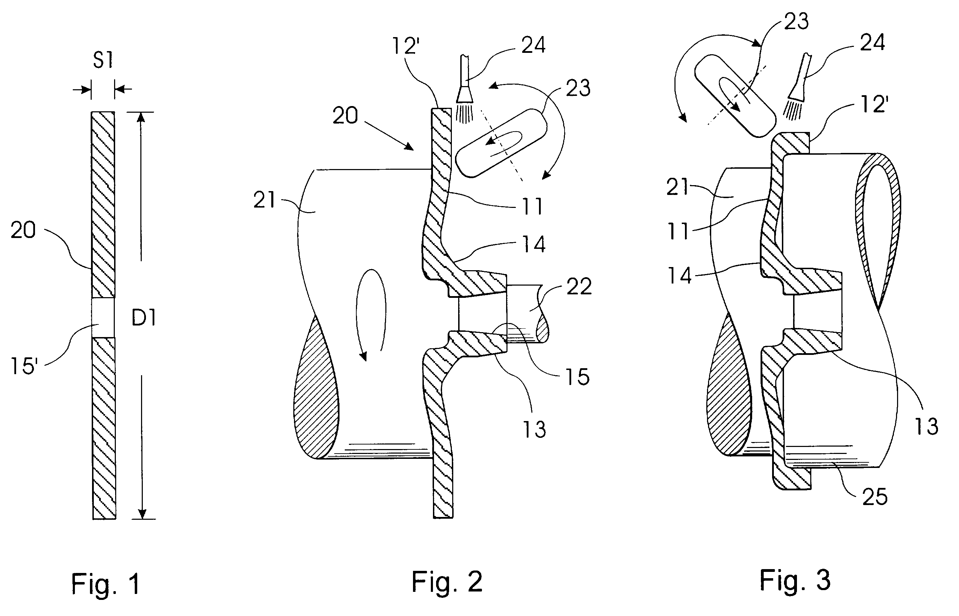

With reference to Figures 1 to 4, according to the present invention, the main shaping stages of the claimed shear-spinning method for shaping a rotor will now be described, it being pointed out that the various rolling and shaping operations for the material against the various shaping surfaces may be repeated one or more times, depending on the specific requirements or the zone of the metal cap member to be shaped.

In Figure 1, reference 20 denotes the starting blank in the form of a cut disk, made of highly malleable metallic material, having a diameter D1 greater than the external diameter D2 of the cylindrical wall 12 of the rotor cup, as well as a thickness S1 which is again greater than the thickness S2 of aforementioned cylindrical wall 12; the disk 20 is moreover provided with a central hole 15' for locking it on a spindle 22 during the hub forming stage having a conical tip portion for the hole 15 of the hub.

The diameter D1 and the thickness S1 of the disk 20 may also differ from that described and shown; for example the diameter D1 of the disk may be less than the external diameter D2 of the ring 12 of the cap member 10, and the thickness S1 of the disk must be consequently greater than the thickness S2 of said ring. In general terms, D1 and S1 must be such that the volume of material of the disk 20, or the starting blank, corresponds exactly to the final volume of the rotor cap 10, including the joining portions 14 of greater thickness, and the hub 13 which in turn, as shown in Figure 5, has a thickness generally greater than the bottom wall 11 owing to the local addition of material as a result of plastic flow of the same material during rolling and shaping operations of the said rotor.

The first shaping step of the rotor cup is shown in Figure 2.

From this figure it can be noted that the starting disk 20 is suitably roll pressed against a rear shaping surface of a revolving mandrel 21 and the conical front tip of the spindle 22 so as to form the bottom wall 11 of the cap member 10 and the hub 13, respectively.

The shaping operation of the bottom wall 11 is performed by repeated cold rolling actions obtained by means of one or more angularly oriented rollers 23 which are pressed with the required force against the material of the disk 20, so as to cause it to adhere against front surface of the mandrel 21 and against the conical tip surface of the spindle 22 which is provided with a rib or slot designed to allow the formation of the slot 17 or the tooth 17' for the key connection of the hub 13 to a drive shaft for the rotor.

During this shaping step of the back wall 11 and the hub 13, the mandrel 21, the spindle 22 and the disk 20 are made to rotate at a predetermined angular speed; at the same time the shaping roller or rollers 23 is/are moved, the inclination thereof, with respect to the original plane of the disk 20, being suitably changed and controlled not only to cause the wall 11 of the cap member 10 to adhere against the front surface of the mandrel 21, but also to cause a flow of material, by plastic deformation, from a predetermined central zone of the disk 20, towards the intermediate joining zone 14 connecting the hub 13 to the back wall 11, and towards the hub itself.

During this step, the mandrel 21 and the conical tip portion of the spindle 22 also form the central conical hole 15 of the hub 13, with the slot 17 or the tooth 17'.

From the same Figure 2 it can be noted that the peripheral edge 12' of the disc 20, during this step, is not affected by the rolling operation.

The operation for cold rolling and shaping of the material may be performed in one or more successive steps, by acting with pressures which are locally varied and/or variable between one step and the next one, in particular using pressures which are greater in region of the connecting zone 14 and the hub 13 so as to confer on the material a predetermined hardening degree, such as to improve the mechanical strength required by these specific portions of the rotor, since they are more greatly subject to stresses.

By modifying the shape of the front surface of the mandrel 21 and at the same time adjusting the movements of the shaping roller or rollers 23, it is possible to vary and/or increase locally the thicknesses of material or to provide the surfaces of the back wall 11 with different profiles such as to obtain the desired configurations and mechanical strength.

During the cold-rolling operation, the temperature of the material must be suitably controlled and kept low so as to avoid excessive overheating; this may be obtained for example by means of water or other cooling liquid sprayed by nozzles schematically indicated by 24.

The second shaping step of the rotor 10 is shown in Figure 3 of the accompanying drawings.

During the second shaping step the rear mandrel 21 for the back wall 11 and the shaping rollers 23, which are now differently oriented are again used, while replacing the spindle 22 with a new front mandrel 25 essentially consisting of a cylindrical body having a flat front surface which partially matches the front flat surface of the rough-shaped piece, so as to allow folding through 90° of the peripheral edge 12' by roller or rollers 23; the folded edges 12' will then be stretched, again by rolling, and lengthened longitudinally on the mandrel 25 until to form the cylindrical ring 12 of the cup-shaped rotor, reducing correspondingly the thickness thereof.

The two folding steps of the edge 12' and shaping of the cylindrical ring 12 are schematically shown in Figures 3 and 4 of the drawings, in which the same reference numbers are used to indicate always similar or equivalent parts.

Also during these successive folding steps of the edge 12' and shaping of the cylindrical ring 12, the mandrels 21, 25 and the partially formed cap are kept continuously rotating, whereas the plastic deformation of the metallic material, in order to shape it against the surfaces of the mandrels 21 and 25, is again obtained by means of the action of the rollers 23, the inclination and the position of which are now suitably changed and controlled in the manner described above.

Since the cylindrical ring 12 of the rotor cup is subject to fewer mechanical stresses, the rolling action may be performed by exerting with the roller or rollers 23 a pressure which is less than that required to shape and flow the metallic material in the region of the joining zone 14 and the hub 13 of the rotor.

During the rolling operation of the peripheral wall 12, or at the end thereof, it is also possible to obtain the relief 18 according to Figure 6, opposite an internal recess 26, by operating with the same roller 23 and any additional mandrel, so as to form the relief 18, again as a result of plastic deformation, from the same material of the ring 12, with the desired dimensions.

From what has been said and shown it will appear the considerable advantages which can be achieved with method for shaping rotors by shear-spinning according to the present invention.

In fact from the figures it can be seen that the entire rotor, namely the cap member 10 and the central hub 23 may be formed as one single piece from a blank of malleable material, by a continuous shaping operation which can be performed by a single operating machine.

During the rolling operations, the pressures exerted on the material may be suitably changed or adapted, so as to vary the hardening degree of the material and hence its mechanical strength, as well as changing the thickness in localised zones where a greater resistance to the stresses is required.

The method and the rolling machine itself may be also easily adapted so as to produce rotors having different design and/or dimension from a same disk 20 of material or from different disks, without this resulting in the need for longer times or laborious operations.

Unlike the other known technologies, a rotor thus formed is totally without joints which generally are the cause of mechanical weaknesses, increasing the total strength of the rotor itself, the structure of which is thus perfectly homogeneous and symmetrical with respect to the central axis of rotation.

There is also the possibility of forming the key seat or relief directly inside the conical hub, without subsequent machining operations.

Finally, there is the possibility of changing or increasing considerably the thickness of the projection 18, which at present is limited by the thickness of the metal sheet used with the conventional techniques; thus the ability of the same projection 18 to provide an effective timing signal to an external pick-up of an ignition circuit of a combustion engine is increased.

This results ultimately in a more streamlined technological process in which the uncertainties associated with mechanical construction and assembly are totally eliminated and consequently the rotor machining times are reduced, with considerable economic advantages which can be equated at the present time to a reduction in production costs of the order of 10-15%.

It is understood, however, that what has been said and illustrated with reference to the accompanying drawings has been provided purely by way of example of the general principles of the invention and that other modifications or variations may be made both to the process itself and to form and composition of the templates and the rotors produced, without thereby departing from that which is claimed.

## Claims

1. Method for forming a rotor for magneto-generators, in which the rotor comprises a cap member (10) of metallic material having a back wall (11) and peripheral wall (12), coaxially extending to a central hub (13), to provide a cylindrical ring for the circulation of the magnetic flux, characterized in that the cap member (10) and the central hub (13) of the rotor are formed as one single piece from a cut disk (20) of malleable metallic material which is cold-formed and shear-spun as a result of plastic flow of the material by rolling operations (23) performed against shaping surfaces of continuously rotating shaping members (21, 22, 25).

2. Method according to Claim 1 characterized in that the hub (13) and the cap member (10) are formed as one single body from a disk (20) of malleable metallic material, by the steps of:
- plastically cold-forming the disk (20) in a central zone thereof so as to form the hub (13) and a rough-shaped back wall (11) of the cap;
- and then folding along the peripheral edge of the rough-shaped back wall (11) longitudinally stretching the same so as to form the external cylindrical ring (12) of the cup member by successive rolling operations (23) performed along said central zone of the disk (20) and along said peripheral edge (12') of the rough-shaped back wall (11).

3. Method according to Claim 2, characterized by changing the thicknesses of material in the region (14) of the central hub (13) and the joining zone of the hub (13) to the back wall (11) as a result of plastic flow material by rolling operation (23) in the region of said central zone of the back wall (11).

4. Method according to Claim 2, characterized by the fact of changing the pressure on the material in localised zones of the cap member (10) during a rolling step or each rolling step, thereby modifying the mechanical strength of the material.

5. Method according to Claim 3, characterized by increasing the rolling pressure on the material in the region of the hub (13) and/or the joining zone (14) to the back wall (11) to the hub (13), thereby locally increasing the mechanical strength of the material.

6. Method according to any one of the preceding claims, characterized in that the rolling operation, during a shaping step and/or during each shaping step of the cup member (10) is repeated once or several times.

7. Method according to any one of the preceding claims, characterized by roll-forming a relief (18) on the external surface of the cylindrical ring (12).

8. Method according to any one of the preceding claims characterized by forming a longitudinal slot (17) or a rib (17') inside the hub (13), during roll-forming.

9. Flywheel rotor for a magneto-generator of the type comprising a cap member (10) of metallic material having back and peripheral walls (11, 12), defining a cylindrical ring peripherally extending from said back wall (11), and a central hub (13) for connection to a drive shaft, characterized in that the cap member (10) and the central hub (13) are made as a single body, from a cut disk (20) of malleable metallic material, plastically cold-shaped in a central zone so as to form said hub (13) and a joining portion (14) for connection of the hub (13) to the back wall (11), and along the peripheral edge so as to form the circular ring (12) by rolling operations to cause the material of the disk (20) to adhere against shaping surfaces of rotatably driven shaping member (21, 22, 25).

10. Flywheel rotor according to Claim 9, characterized in that said back wall (11), in the joining zone (14) of the hub (13), is provided with increased thicknesses.

11. Flywheel rotor according to Claim 9, characterized in that the cylindrical ring (12) of the cap member (10) is provided with at least one relief (18) on the external surface.

12. Flywheel rotor according to any one of the preceding claims, characterized in that the cylindrical ring (12) of the cap member (10) is provided with a different thickness in respect to the back wall (11) .
